# EUROPÄISCHE PATENTSCHRIFT

(11) **EP 3 321 422 B1**
(45) Veröffentlichungstag und Bekanntmachung des Hinweises auf die Patenterteilung: **10.07.2019**
(21) Anmeldenummer: 17200497.0
(22) Anmeldetag: 08.11.2017
(51) Int. Cl.: E01C 23/088, G06Q 10/08, B65G 67/22

(54) **SYSTEM UND VERFAHREN ZUM NACHVERFOLGEN VON FRÄSGUT**
SYSTEM AND METHOD FOR TRACKING MILLED MATERIAL
SYSTÈME ET PROCÉDÉ DE SUIVI DE MATIÈRE FRAISÉE

(30) Priorität: 11.11.2016 DE 102016222145
(43) Veröffentlichungstag der Anmeldung: 16.05.2018
(73) Patentinhaber: Wirtgen GmbH, 53578 Windhagen (DE)
(72) Erfinder: Berning, Christian, 53909 Zülpich (DE); Menzenbach, Christoph, 53577 Neustadt/Wied (DE); Barimani, Cyrus, 53639 Königswinter (DE)
(74) Vertreter: dompatent von Kreisler Selting Werner - Partnerschaft von Patent- und Rechtsanwälten mbB

(56) Entgegenhaltungen:
- EP-A2- 3 040 477
- DE-A1-102011 113 752
- DE-A1-102012 017 337
- DE-A1-102015 005 194

## Beschreibung

Die Erfindung betrifft ein System nach dem Oberbegriff des Anspruchs 1, sowie ein Verfahren zum Nachverfolgen von Fräsgut nach dem Oberbegriff des Anspruchs 11.

Es sind Fräsmaschinen bekannt, mit denen Abschnitte eines Bodenbelags in einem Fräsbetrieb gefräst werden können. Ferner wird das beim Fräsen des Abschnitts des Bodenbelags abgetragene Fräsgut auf einen LKW geladen und abtransportiert. Das auf dem LKW abtransportierte Fräsgut wird an einer Ablagestelle abgelegt. Es ist bekannt mit einer ersten Erfassungseinrichtung das Fräsgut betreffende Datensignale zu erfassen. Dabei werden beispielsweise Frästiefe und abgetragenes Fräsvolumen erfasst.

DE 10 2012 017 337 A1 offenbart eine Baumaschine mit einem Maschinenrahmen, einem Fahrwerk mit mehreren Fahreinrichtungen und einer Antriebseinrichtung. Das Dokument offenbart ein Verfahren zur Bestimmung der Fortbewegungsgeschwindigkeit der Baumaschine, sowie ein Verfahren zur Bestimmung eines Bodenbearbeitungsvolumens der Baumaschine.

Dokument DE 10 2011 113 752 A1 offenbart eine Fräsvorrichtung, die zur Ermittlung einer Fräskante im Bereich der Arbeitsbreite des Fräsrotors ausgebildet ist.

Dokument DE 10 2015 005 194 A1 offenbart ein Verfahren zur Ermittlung und Überwachung der Masse des von einer Bodenfräsmaschine abgetragenen Fräsguts.

Dokument EP 3 040 447 A2 offenbart ein Verfahren und eine Vorrichtung zum Bestimmen einer von mindestens einer Baumaschine oder Abbaumaschine mit einer Fräswalze gefrästen Fläche.

Es besteht jedoch zunehmend Bedarf, dass das abgetragene Fräsgut wieder zu recyceln.

Aufgabe der vorliegenden Erfindung ist es daher, ein System und ein Verfahren zu schaffen, mit dem die Recyclingmöglichkeiten des Fräsguts verbessert werden kann.

Zur Lösung dieser Aufgabe dienen die Merkmale der Ansprüche 1 und 11.

Die Erfindung sieht in vorteilhafter Weise vor, dass eine zweite Erfassungseinrichtung Positionsdaten der Ablagestelle des Fräsguts erfasst, wobei die erste und die zweite Erfassungseinrichtung, die das Fräsgut betreffenden Datensignale und die Positionsdaten der Ablagestelle an eine Dokumentationseinrichtung senden, die die Positionsdaten und die das Fräsgut betreffenden Datensignale miteinander verknüpft.

Somit sind die Materialeigenschaften des Fräsguts und die dazugehörige Ablagestelle bekannt. Dies hat den Vorteil, dass vor dem Recyceln die Materialeigenschaften/Fräsguteigenschaftendes zu recycelnden Fräsguts bekannt sind, ohne dass sie an der Ablagestelle erneut bestimmt werden müssen.

Die erste Erfassungseinrichtung erfasst die das Fräsgut betreffenden Datensignale.

Die erste Erfassungseinrichtung kann die das Fräsgut betreffenden Datensignale aus der Steuereinrichtung der Fräsmaschine erfassen.

Die erste Erfassungseinrichtung kann an der Fräsmaschine angeordnet sein, vorzugsweise Teil der Steuereinrichtung der Fräsmaschine sein.

Die zweite Erfassungseinrichtung kann ein Mobiltelefon oder ein Transponder, insbesondere RFID-Chip oder ein Gerät mit GPS-Empfänger und vorzugsweise Transmitter zum Übermitteln von GPS-Daten sein. Auch kann die zweite Erfassungseinrichtung ein Lesegerät sein, z.B. zum Auslesen von Daten einer Signalsendeeinrichtung oder eines Transponders.

An der Ablagestelle können Positionsdatensignale erfasst werden, die die Positionsdaten der Ablagestelle darstellen. Positionsdatensignale sind somit Signale zur Positionsbestimmung. Positionsdaten dienen der Identifizierung der Ablagestelle. Positionsdatensignale können beispielsweise GPS-Signale sein, die den genauen Standort der Ablagestelle angeben. Als Positionsdaten können Koordinaten oder auch beispielsweise der Name einer Deponie sein, der anhand der GPS-Signale ermittelt wird.

Auch kann die zweite Erfassungseinrichtung die Positionsdaten z.B. an der Ablagestelle beispielsweise dadurch erfassen, dass z.B. ein Transponder, wie beispielsweise ein RFID Chip, an der Ablagestelle platziert ist. In diesem Transponder ist ein Kennungscode für die Ablagestelle gespeichert. Dies kann der Name des Ortes, die Koordinaten, der Name der Ablagestelle oder jede andere beliebige Kennung der Ablagestelle sein, wobei die Ablagestelle eine Deponie sein kann. Die zweite Erfassungseinrichtung kann den Kennungscode des Transponders erfassen. Der Transponder kann beispielsweise am Eingangstor einer Deponie angeordnet sein. Alternativ können die Positionsdaten auch manuell in die zweite Erfassungseinrichtung eingegeben werden, wie beispielsweise der Name einer Deponie.

Die Erfassung der Positionsdaten kann dabei automatisch erfolgen, beispielsweise wenn der Lkw entladen wird. Die zweite Erfassungseinrichtung kann beispielsweise ein "abkippen" registrieren - z. B. weil die zweite Erfassungseinrichtung mit der Lkw-Steuerung verbunden sein kann oder weil Vibrationen beim Abkippen registriert werden. Auch kann das Abkippen anhand des Bewegungsprofils des LKW ermittelt werden, z.B. anhand der Standzeit oder aufgrund unterschiedlicher Beschleunigungsprofile, wenn der Lkw be- oder entladen ist. Alternativ kann die Erfassung durch den Fahrer ausgelöst werden.

Die Dokumentationseinrichtung kann Teil der ersten Erfassungseinrichtung oder Teil der zweiten Erfassungseinrichtung sein.

Alternativ kann die Dokumentationseinrichtung außerhalb der ersten Erfassungseinrichtung und außerhalb der zweiten Erfassungseinrichtung und auch außerhalb der Fräsmaschine angeordnet sein.

Die erste Erfassungseinrichtung kann vorzugsweise an der Fräsmaschine angeordnet sein.

Die zweite Erfassungseinrichtung kann vorzugsweise an dem LKW angeordnet sein oder auf dem Lkw mitgeführt werden. Alternativ kann die zweite Erfassungseinrichtung auch bei oder an dem Fräsgut selbst angeordnet sein.

Die Übermittelung der Daten und/oder Positionssignale zwischen erster Erfassungseinrichtung und Dokumentationseinrichtung und/oder zwischen zweiter Erfassungseinrichtung und Dokumentationseinrichtung kann über eine zumindest teilweise drahtlose Verbindung, insbesondere Funkverbindung, wie beispielsweise eine WLAN- oder Bluetooth-Verbindung erfolgen.

Die das Fräsgut betreffenden Datensignale können die Materialeigenschaften des Fräsguts betreffende Datensignale sein, insbesondere das Material des Fräsguts und/oder Ortsdaten des gefrästen Abschnitts des Bodenbelags.

Bezüglich der die Materialeigenschaften des Fräsguts betreffenden Datensignale können dies Datensignale sein, die direkt die Materialeigenschaften des Materials beschreiben oder Datensignale sein, mit denen Rückschlüsse auf das Material gezogen werden können. Daher können auch im Sinne der Erfindung die Ortsdaten des gefrästen Abschnitts des Bodenbelags die Materialeigenschaften des Fräsguts betreffende Datensignale sein. Es kann beispielsweise ermittelt werden, welcher Autobahnabschnitt gefräst wird. Es kann bekannt sein, welches Material in dem Autobahnabschnitt verbaut worden ist, so dass anhand des Autobahnabschnitts ermittelt werden kann welches Material verbaut worden ist.

Es kann beispielsweise bekannt sein, welcher Asphalt verbaut worden ist oder welche Zusammensetzung das verbaute Material hat. Auch kann bekannt sein welches Material in unterschiedlichen Schichten des Bodenbelags verbaut worden ist. Der Bodenbelag weist in der Regel eine Deck-, eine Binder- und eine Tragschicht auf. Die bekannten Informationen bezüglich des Materials können in einer Datenbank (z.B. lokal auf der Fräsmaschine oder außerhalb der Fräsmaschine) hinterlegt sein oder es können diese Informationen von einem Bediener der Fräsmaschine eingegeben werden. Die Ortsdaten können auch anhand von GPS Koordinaten ermittelt werden. Diese die Materialeigenschaften des Fräsguts betreffende Datensignale können dann von der ersten Erfassungseinrichtung erfasst werden.

Auch können beispielsweise Proben des abgefrästen Materials genommen werden und direkt oder erst später ausgewertet werden. Im Sinne der Erfindung können die die Materialeigenschaften des Fräsguts betreffenden Datensignale auch Datensignale sein, die die Nummer oder den Namen einer solchen Probe betreffen.

Materialeigenschaften des Fräsguts können für die Entsorgung und das Recycling interessant sein. Beispielsweise kann es wichtig sein, dass bekannt ist, ob Teer in dem Fräsgut enthalten ist, da Teer gesondert entsorgt werden muss. Ferner kann für das Recycling das Wissen bezüglich der Bitumenanteile im Fräsgut relevant sein.

Bereits die Information aus welcher Schicht des Straßenaufbaus das Fräsgut stammt kann als Materialeigenschaft von Bedeutung sein. Beispielsweise darf Material aus einer Tragschicht im Zuge einer Wiederverwendung nicht zur Herstellung einer Asphaltmischung verwendet werden, die als Decksicht in einem neuen Straßenaufbau verwendet werden soll. Das Fräsgut, das hingegen aus einer Deckschicht stammt kann zu einer Asphaltmischung aufbereitet werden, als Tragschicht in einem neuen Straßenaufbau verwendet wird.

Die das Fräsgut betreffenden Datensignale können Betriebsparameter der Fräsmaschine sein oder Daten bzw. Datensignale sein, die mithilfe der Betriebsparameter, Ortsdaten oder eingegebener Informationen ermittelt werden. Es können somit sowohl die direkt ermittelten bzw. eingegebenen Daten bzw. Datensignale als auch daraus abgeleitete Daten als das Fräsgut betreffende Datensignale erfasst werden.

Betriebsparameter können insbesondere Frästiefe, abgetragenes Fräsvolumen, Vorschubgeschwindigkeit, Fräswalzendrehzahl, Verhältnis zwischen Vorschub und Fräswalzendrehzahl, verwendete Fräswalze, abgegebenes Drehmoment/Leistung des Antriebsmotors der Fräsmaschine oder die während des Fräsprozess zur Kühlung der Fräswerkzeuge zugeführte Wassermenge sein. Darüber hinaus kann erfasst werden, ob die Fräse im Gleichlauf- oder Gegenlauffräsen arbeitet (Drehrichtung der Fräswalze gleich-/gegensinnig zu Drehrichtung der Laufwerke). Die das Fräsgut betreffenden Datensignale können auch Masse und /oder Volumen des auf den LKW verladenen Fräsguts sein.

Mithilfe dieser Betriebsparameter können Daten oder Datensignale ermittelt werden. Dies können Materialeigenschaften des Fräsguts, wie beispielsweise die Korngrößenverteilung im Fräsgut, Feinanteile / Grobanteile sein. Die physischen Eigenschaften können beispielsweise aus dem Verhältnis zwischen Vorschub und Fräswalzendrehzahl oder verwendeter Fräswalze hergeleitet werden.

Weiterhin kann aus den Betriebsparametern, z. B. aus der Frästiefe bestimmt werden, welche Schicht des Bodenbelags gefräst wurde. Der Bodenbelag weist beispielsweise eine Deck-, eine Binder- und eine Tragschicht auf, die in der Regel unterschiedliche Schichtdicken aufweisen. Neben der Frästiefe können beispielsweise auch von der Fräse erfasste Ortsdaten berücksichtigt werden, um zu ermitteln, ob an einer Stelle bereits gefräst wurde. Diese Informationen können korreliert werden, um somit genauere Rückschlüsse auf die gerade gefräste Schicht zu ermöglichen.

Gemäß der vorliegenden Erfindung kann ein Verfahren zum Nachverfolgen von Fräsgut vorgesehen sein, das die folgenden Schritte aufweist
- Fräsen eines Abschnitts eines Bodenbelages mit einer Fräsmaschine in einem Fräsbetrieb,
- Ablegen des während des Fräsbetriebs gefrästen Fräsguts auf einer Ladefläche -eines LKWs,
- Erfassen von das Fräsgut betreffenden Datensignale in einer ersten Erfassungseinrichtung,
- Transport des auf der Ladefläche des LKWs abgelegten Fräsguts zu einer Ablagestelle und Ablegen des Fräsguts an der Ablagestelle.

Es ist in vorteilhafter Weise vorgesehen, dass mit Hilfe einer zweiten Erfassungseinrichtung Positionsdaten der Ablagestelle erfasst werden, und wobei die erste und die zweite Erfassungseinrichtung, die das Fräsgut betreffenden Datensignale und die Positionsdaten an eine Dokumentationseinrichtung senden, die die Positionsdaten und die das Fräsgut betreffenden Datensignale miteinander verknüpft.

Verknüpfen bedeutet, dass abgespeichert wird, welches Fräsgut welche Ablagestelle zugeordnet ist. Diese Information kann abgreifbar sein.

Die erste Erfassungseinrichtung kann an der Fräsmaschine angeordnet sein, vorzugsweise Teil einer Steuereinrichtung der Fräsmaschine sein.

Die zweite Erfassungseinrichtung kann als Positionsdaten GPS-Datensignale an der Ablagestelle erfassen.

Die Übermittlung der Datensignale und/oder Positionsdaten zwischen erster Erfassungseinrichtung und Dokumentationseinrichtung und/oder zwischen zweiter Erfassungseinrichtung und Dokumentationseinrichtung kann über eine drahtlose Verbindung, insbesondere Funkverbindung oder Internetverbindung erfolgen.

Die Dokumentationseinrichtung kann außerhalb der Fräsmaschine und/oder außerhalb der zweiten Erfassungseinrichtung angeordnet sein.

Im Folgenden werden unter Bezugnahme auf die Zeichnungen Ausführungsbeispiele der Erfindung näher erläutert.

Es zeigen schematisch:
- Fig. 1: ein System zum Nachverfolgen von Fräsgut,
- Fig. 2: das Ausführungsbeispiel gemäß Fig. 1 mit einem LKW an der Ablagestelle,
- Fig. 3: ein alternatives Ausführungsbeispiel eines Systems zur Nachverfolgung,
- Fig. 4: die erste und zweite Erfassungseinrichtung sowie die Dokumentationseinrichtung,
- Fig. 5: ein alternatives Ausführungsbeispiel zu Fig. 4, und
- Fig. 6: ein alternatives Ausführungsbeispiel.

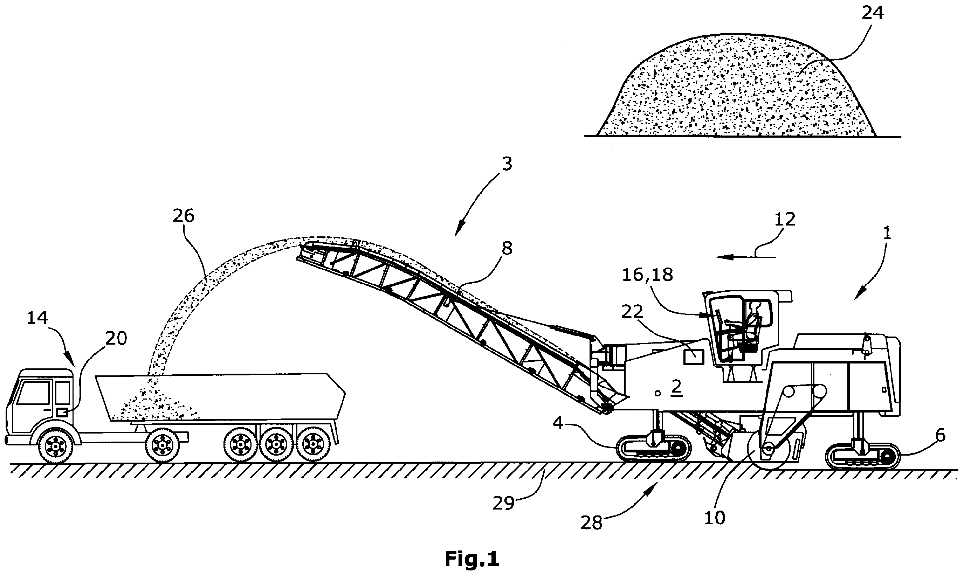

In Fig. 1 ist ein System zum Nachverfolgen von Fräsgut dargestellt.

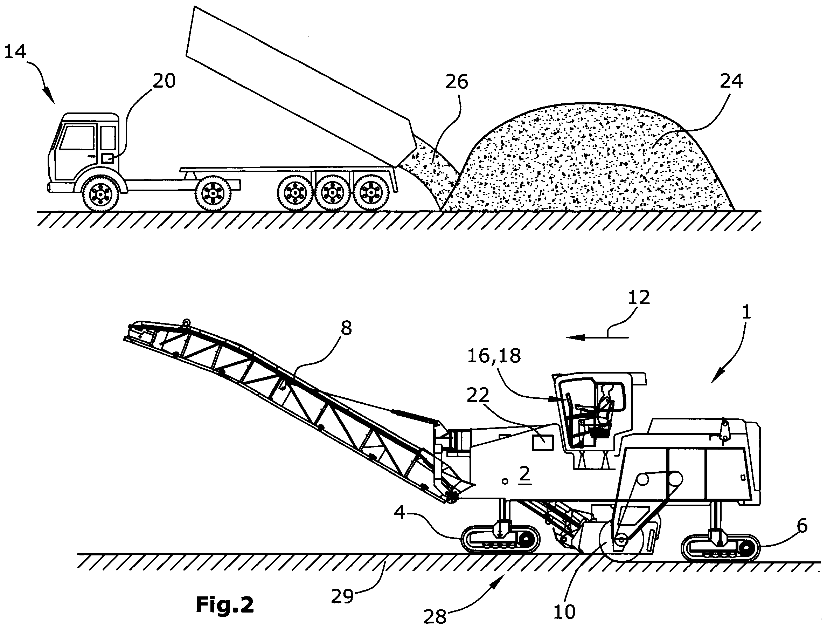

Das System 3 weist eine Fräsmaschine 1 zum Fräsen eines Abschnitts 28 eines Bodenbelags 29 in einem Fräsbetrieb auf. Mittels der Fräsmaschine 1 wird der Bodenbelag 29 gefräst und das abgetragene Fräsgut 26 über zumindest ein Transportband 8 auf einen LKW 14 geladen. Wie in Fig. 2 dargestellt wird, kann das auf den LKW abgeladene Fräsgut 26 an einer Ablagestelle 24 abgelegt werden.

Die Fräsmaschine 1 kann zumindest einen Maschinenrahmen 2 aufweisen. Ferner weist die Fräsmaschine eine höhenverstellbare Fräswalze 10 zum Bearbeiten des Bodenbelags 29 auf, wobei in einem Fräsbetrieb die Fräswalze 10 den Bodenbelag 29 bearbeitet. Die Fräswalze 10 wird von einer Antriebseinheit angetrieben. Die Antriebseinheit ist vorzugsweise ein Antriebsmotor, insbesondere ein Verbrennungsmotor. Die Fräsmaschine 1 weist in Arbeitsrichtung 12 vordere und hintere Fahreinrichtungen 4, 6 auf. Diese Fahreinrichtungen 4, 6 können Räder oder Kettenlaufwerke sein. Die Fahreinrichtungen 4, 6 können über Hubsäulen mit dem Maschinenrahmen 2 verbunden sein. Mit Hilfe der Hubsäulen kann die Fräsmaschine 1 bzw. der Maschinenrahmen 2 relativ zum Bodenbelag 29 höhenverstellt werden. Durch Verstellen der Hubsäulen wird der Maschinenrahmen 2 höhenverstellt und damit wird auch die im Maschinenrahmen 2 gelagerte Fräswalze 10 höhenverstellt. Alternativ oder zusätzlich kann die Fräswalze 10 relativ zum Maschinenrahmen 2 höhenverstellbar sein.

Es ist eine erste Erfassungseinrichtung 18 dargestellt, mit der das Fräsgut betreffende Datensignale erfasst werden können. Im dargestellten Ausführungsbeispiel ist die erste Erfassungseinrichtung 18 an der Fräsmaschine 1 angeordnet. Die erste Erfassungseinrichtung 18 kann das Fräsgut betreffende Datensignale erfassen. Dies können beispielsweise Betriebsparameter der Fräsmaschine 1 sein oder Daten bzw. Datensignale die mithilfe der Betriebsparameter ermittelt werden.

Betriebsparameter können Frästiefe, abgetragenes Fräsvolumen, Frästiefe, Vorschubgeschwindigkeit, Fräswalzendrehzahl, Verhältnis zwischen Vorschub und Fräswalzendrehzahl, verwendete Fräswalze, abgegebenes Drehmoment/Leistung des Antriebsmotors der Fräsmaschine oder zugegebene Wassermenge sein. Darüber hinaus kann erfasst werden, ob die Fräse im Gleichlauf- oder Gegenlauffräsen arbeitet. Anhand dieser Betriebsparameter kann die Menge bzw. das Volumen oder die Masse des abgetragenen Fräsguts ermittelt werden oder auch indirekt Rückschlüsse auf die Materialeigenschaften des Fräsguts gezogen werden. Diese Materialeigenschaften oder ermittelten Daten können als das Fräsgut betreffende Datensignale erfasst werden.

Auch kann die erste Erfassungseinrichtung 18 weitere, nicht anhand der Betriebsparameter bestimmbare Materialeigenschaften des Fräsguts als das Fräsgut betreffende Datensignale erfassen. Es können beispielsweise die Ortsdaten des gefrästen Abschnitts 28 des Bodenbelags 29 erfasst werden. Es kann bekannt sein, welches Material in diesem Abschnitt 28 verbaut worden ist, so dass anhand der Ortsdaten Rückschlüsse auf das Material gezogen werden können. Zusätzlich oder alternativ können Materialeigenschaften des Fräsguts eingegeben bzw. hinterlegt werden, so dass die erste Erfassungseinrichtung 18 diese Materialeigenschaften des Fräsguts erfassen kann.

Auch Informationen bezüglich der gerade gefrästen Schicht des Bodenbelags 29 können aus den Betriebsparametern der Fräsmaschine 1 abgeleitet oder eingegeben werden. Diese abgeleiteten oder eingegebenen Informationen können als das Fräsgut betreffenden Datensignale erfasst werden.

Die Betriebsparameter kann die Erfassungseinrichtung 18 über die Steuereinrichtung 16 der Fräsmaschine 1 erfassen. Die erste Erfassungseinrichtung 18 kann auch extern von der Fräsmaschine 1 angeordnet sein.

Das System 3 zum Nachverfolgen von Fräsgut weist ferner eine zweite Erfassung 20 auf, die Positionsdaten der Ablagestelle des Fräsguts erfasst. Dafür kann beispielsweise die zweite Erfassungseinrichtung 20, wie in den Fign. 1 und 2 dargestellt, an dem LKW 14 angeordnet sein. Wenn der LKW an der Ablagestelle 24 ist, können beispielsweise Positionsdatensignale an der Ablagestelle erfasst werden, die die Positionsdaten der Ablagestelle darstellen können. Diese Positionsdatensignale können beispielsweise GPS-Signale sein. Die zweite Erfassungseinrichtung kann auch an dem abgefrästen Fräsgut 26 angeordnet sein.

Die Erfassung der Positionsdaten kann dabei automatisch erfolgen, beispielsweise wenn der Lkw entladen wird. Die zweite Erfassungseinrichtung kann beispielsweise ein "abkippen" registrieren - z. B. weil die zweite Erfassungseinrichtung mit der LKW-Steuerung verbunden sein kann oder weil Vibrationen beim Abkippen registriert werden. Auch kann das Abkippen anhand des Bewegungsprofils des LKW ermittelt werden, z.B. anhand Standzeit oder unterschiedlicher Beschleunigungsprofile, wenn der LKW be- oder entladen ist. Alternativ kann die Erfassung durch den Fahrer ausgelöst werden.

Die zweite Erfassungseinrichtung 20 kann beispielsweise ein Transponder sein, der GPS-Signale empfängt. Die zweite Erfassungseinrichtung 20 kann auch ein Mobiltelefon sein, das beispielsweise der Lastwagenführer des LKWs mitführt. Auf diesem Mobiltelefon kann eine Anwendung aufgespielt sein, die durch Betätigen des Mobiltelefons die GPS-Signale erfasst und als Positionsdaten abspeichert. Das Mobiltelefon kann die Positionsdaten an die Dokumentationseinrichtung 22 über eine Internetverbindung übermitteln. Alternativ kann beispielsweise an der Ablagestelle die Positionsdaten eingegeben werden.

Ferner ist eine Dokumentationseinrichtung 22 vorgesehen, an die die erste und die zweite Erfassungseinrichtung 18, 20 die das Fräsgut betreffenden Datensignale und die Positionsdaten der Ablagestelle senden, wobei die Dokumentationseinrichtung 22 die Positionsdaten und die das Fräsgut betreffenden Datensignale miteinander verknüpft. Somit kann genau identifiziert werden, welches abgefräste Fräsgut an welcher Ablagestelle abgelegt worden ist, wobei die Positionsdaten der Ablagestelle genau bekannt sind.

Als Positionsdaten können beispielsweise GPS-Daten hinterlegt sein. Es kann jedoch auch lediglich angegeben sein, auf welcher Deponie das Fräsgut abgelegt worden ist. Die Übermittlung der das Fräsgut betreffenden Datensignale und der Positionsdaten zwischen erster und/oder zweiter Erfassungseinrichtung 18, 20 und Dokumentationseinrichtung 22 kann über eine drahtlose Verbindung, insbesondere Funkverbindung und/oder Internetverbindung erfolgen.

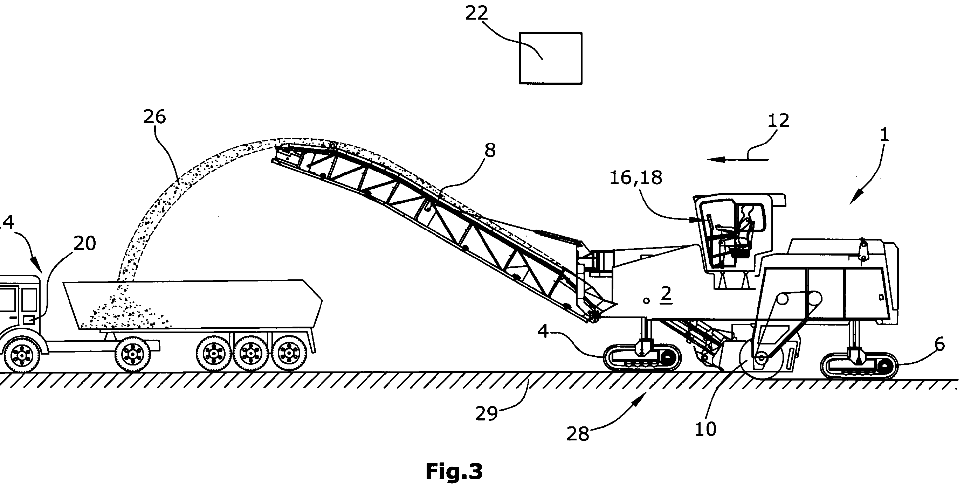

In Fig. 3 ist dargestellt, dass die Dokumentationseinrichtung 22 auch extern von der Fräsmaschine 1 und dem LKW 14 angeordnet sein kann.

Auch die erste Erfassungseinrichtung 18 und/oder die zweite Erfassungseinrichtung 20 können extern von der Fräsmaschine und/oder von dem LKW 14 angeordnet sein.

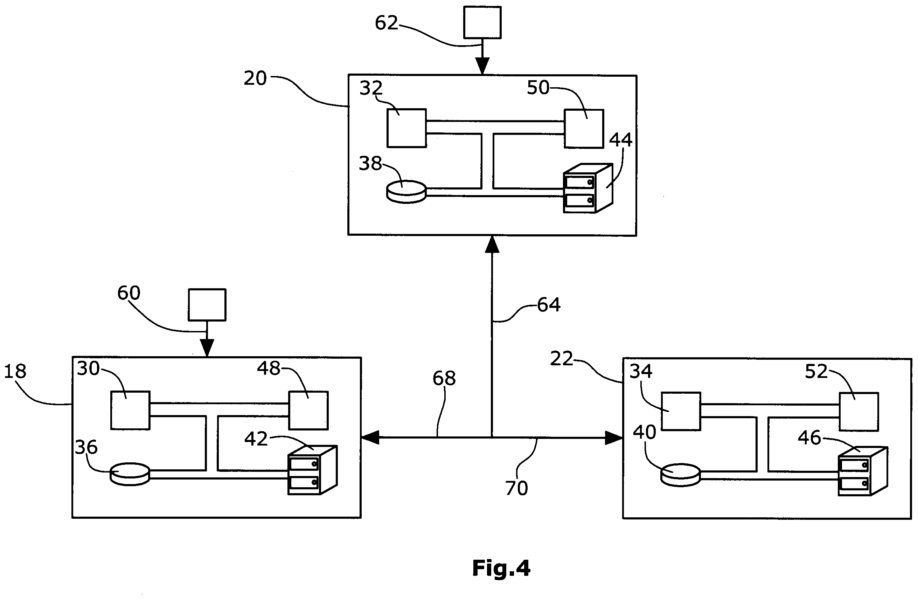

In Fig. 4 sind die erste Erfassungseinrichtung 18, die zweite Erfassungseinrichtung 20 und die Dokumentationseinrichtung 22 dargestellt.

Die erste Erfassungseinrichtung 18, die zweite Erfassungseinrichtung 20 und die Dokumentationseinrichtung 22 können Computersysteme sein. Diese können Prozessoren 30, 32, 34 und/oder computerlesbare Speicher 36, 38, 40 und/oder Datenbanken 42, 44, 46 und/oder eine IO-Plattform oder Modul 48, 50, 52, welche typischerweise ein Benutzerinterface aufweist, aufweisen.

Die erste Erfassungseinrichtung 18 kann Datensignale 60 erfassen. Die Datensignale 60 können von der Steuereinrichtung 16 erfasst werden oder auch eingegeben werden. Alternativ kann die erste Erfassungseinrichtung 18 auch die Datensignale 60 von Sensoren der Fräsmaschine 1 direkt empfangen. Aus den Datensignalen 60 kann die Erfassungseinrichtung 18 die das Fräsgut betreffenden Datensignale ermitteln. Umfassen die Datensignale 60 beispielsweise Fräswalzendrehzahl und die Vorschubgeschwindigkeit der Fräsmaschine, so können diese Datensignale 60 mithilfe des Prozessors 30 und/oder Datenbank 42 mit einer Korngrößenverteilung des Fräsguts korreliert werden. Umfassen die Datensignale 60 GPS-Koordinaten die für den gerade gefrästen Abschnitt 28 des Bodenbelags repräsentativ sind, so kann in der Datenbank 42 die Materialeigenschaften des Materials hinterlegt sein welches an diesem Abschnitt 28 vorliegt. Die so ermittelte Korngrößenverteilung und/oder die Materialeigenschaften können als das Fräsgut betreffende Datensignale an die Dokumentationseinrichtung 22 übertragen werden. Alternativ oder zusätzlich können die Datensignale 60 direkt als das Fräsgut betreffende Datensignale an die Dokumentationseinrichrichtung 22 übertragen werden.

Die zweite Erfassungseinrichtung 20 kann die Positionsdaten der Ablagestelle erfassen. Diese Positionsdaten können als Positionsdatensignale 62 erfasst werden oder aus den Positionsdatensignalen 62 abgeleitet werden. Alternativ können die Positionsdaten auch über ein Interface 50 eingegeben werden.

Die Dokumentationseinrichtung 22 erhält die von der ersten Erfassungseinrichtung 18 erfassten das Fräsgut betreffenden Datensignale und die von der zweiten Erfassungseinrichtung erfassten Positionsdaten. Die Übermittlung ist mit den Pfeilen 64, 68 und 70 dargestellt. In der Dokumentationseinrichtung 22 werden die das Fräsgut betreffenden Datensignalen mit den Positionsdaten verknüpft. Anhand dieser Verknüpfung kann somit nachvollzogen werden an welcher Abladestelle welches Fräsgut abgeladen wurde. Diese Korrelation kann in der Datenbank 46 für einen späteren Abruf und/oder zur Anzeige auf einem Benutzerinterface des IO-Moduls 52 abgespeichert werden.

Es könnte auch sein, dass die Dokumentationseinrichtung 22 Datensignale an die erste und/oder zweite Erfassungseinrichtung 18, 20 sendet. Somit kann beispielsweise gewährleistet werden, dass sowohl an der ersten als auch an der zweiten Erfassungseinrichtung 18,20 über ein Benutzerinterface des IO-Moduls 48,50 die Zuordnung von den das Fräsgut betreffenden Datensignale zu den Positionsdaten der Ablagestelle abgefragt werden kann, mithin also an beiden Erfassungseinrichtungen 18, 20 dargestellt werden kann an welcher Abladestelle welches Fräsgut abgeladen wurde. Hierzu können Beispielsweise Daten aus der Datenbank 46 der Dokumentationseinrichtung 22 in die Datenbanken 42,44 der ersten und zweiten Erfassungseinrichtung 18,20 übertragen werden.

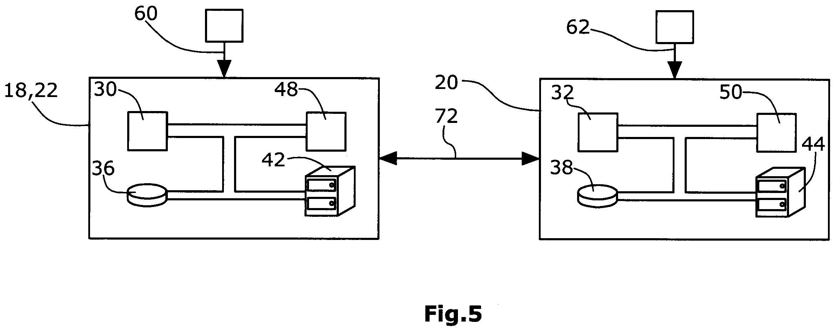

In Fig. 5 ist ein alternatives Ausführungsbeispiel dargestellt.

In der Fig. 5 ist dargestellt, dass die erste Erfassungseinrichtung 18 und die Dokumentationseinrichtung 22 in einem System integriert sind. Dieses integrierte System kann auch Teil der Steuereinrichtung 16 der Fräsmaschine 1 sein. Auch das integrierte System kann einen Prozessor 30 und/oder einen Speicher 36 und/oder ein Interface 48 und/oder eine Datenbank 42 aufweisen. Die zweite Erfassungseinrichtung 20 kann Daten an das integrierte System aus erster Erfassungseinrichtung 18 und Dokumentationseinrichtung 22 senden. Die Übermittlung ist mit dem Pfeil 72 dargestellt. Auch können die erste Erfassungseinrichtung 18, die zweite Erfassungseinrichtung 20 und die Dokumentationseinrichtung 22 ein integriertes System sein, so dass zentrale Datenspeicherung vorgesehen ist. Die das Fräsgut betreffenden Datensignale und die Positionsdaten der Ablagestelle können über drahtlose Verbindungen an ein solches zentrales System gesendet werden und dort jeweils erfasst werden.

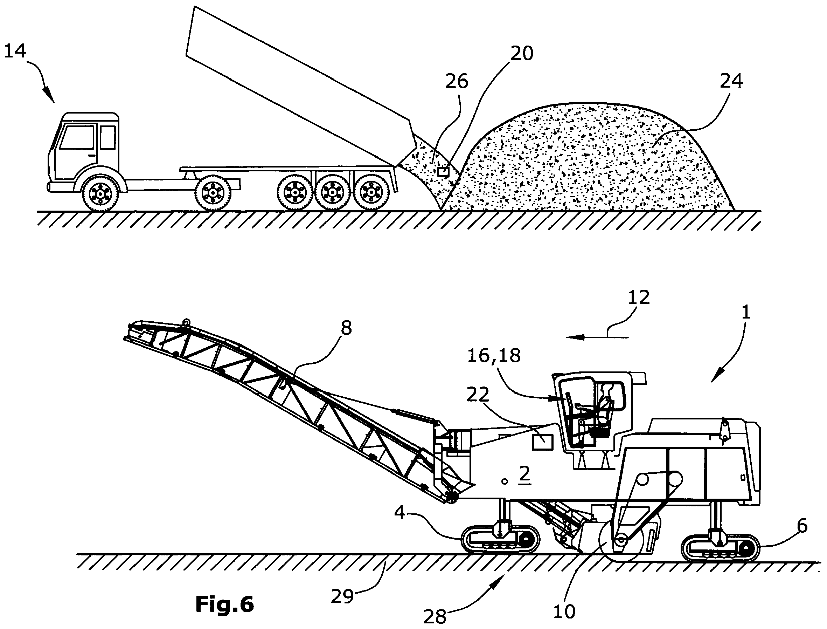

Figur 6 zeigt ein alternatives Ausführungsbeispiel zu Figur 2. Es unterscheidet sich dadurch, dass die zweite Erfassungseinrichtung 20 an dem auf der Ablagestelle abgelegten Fräsgut 26 angeordnet ist.

## Patentansprüche

1. System (3) zum Nachverfolgen von Fräsgut (26), mit
- einer Fräsmaschine (1) zum Fräsen eines Abschnitts (28) eines Bodenbelags (29) in einem Fräsbetrieb,
- einem LKW (14) zum Beladen und Abtransportieren des beim Fräsen des Abschnitts (28) des Bodenbelags (29) abgetragenen Fräsguts (26),
- einer Ablagestelle (24) zum Ablegen des mit dem LKW (14) abtransportieren Fräsguts (26),
- einer ersten Erfassungseinrichtung (18) zum Erfassen von das Fräsgut (26) betreffende Datensignale,
**dadurch gekennzeichnet,**
**dass** eine zweite Erfassungseinrichtung (20) Positionsdaten der Ablagestelle des Fräsguts (26) erfasst, wobei die erste und die zweite Erfassungseinrichtung (18, 20) die das Fräsgut (26) betreffenden Datensignale (60) und die Positionsdaten der Ablagestelle (24) an eine Dokumentationseinrichtung (22) übermitteln, die die Positionsdaten und die das Fräsgut (26) betreffenden Datensignale miteinander verknüpft.

2. System (3) nach Anspruch 1, **dadurch gekennzeichnet, dass** die erste Erfassungseinrichtung (18) die das Fräsgut (26) betreffenden Datensignale aus der Steuereinrichtung (16) der Fräsmaschine (1) erfasst.

3. System (3) nach Anspruch 1 oder 2, **dadurch gekennzeichnet, dass** die ersten Erfassungseinrichtung (18) an der Fräsmaschine (1) angeordnet ist, vorzugsweise Teil der Steuereinrichtung (16) der Fräsmaschine (1) ist.

4. System (3) nach einem der Ansprüche 1 bis 3, **dadurch gekennzeichnet, dass** die zweite Erfassungseinrichtung (20) ein Mobiltelefon oder ein Transponder insbesondere RFID-Chip oder eine Gerät mit GPS Empfänger und vorzugsweise Transmitter zum Übermitteln von GPS Daten ist.

5. System (3) nach einem der Ansprüche 1 bis 4, **dadurch gekennzeichnet, dass** die zweite Erfassungseinrichtung (20) als Positionsdaten GPS Datensignale an der Ablagestelle (24) erfasst.

6. System (3) nach einem der Ansprüche 1 bis 5, **dadurch gekennzeichnet, dass** die Dokumentationseinrichtung (22) Teil der ersten Erfassungseinrichtung (18) oder Teil der zweiten Erfassungseinrichtung (20) ist.

7. System (3) nach einem der Ansprüche 1 bis 5, **dadurch gekennzeichnet, dass** die Dokumentationseinrichtung (22) außerhalb der Fräsmaschine (1) und außerhalb der zweiten Erfassungseinrichtung (20) angeordnet ist.

8. System (3) nach einem der Ansprüche 1 bis 7, **dadurch gekennzeichnet, dass** die Übermittlung der Daten- und/oder Positionssignale zwischen erster Erfassungseinrichtung (18) und Dokumentationseinrichtung (22) und/oder zwischen zweiter Erfassungseinrichtung (20) und Dokumentationseinrichtung (22) über eine drahtlose Verbindung, insbesondere Funkverbindung erfolgt.

9. System (3) nach einem der Ansprüche 1 bis 8, **dadurch gekennzeichnet, dass** die das Fräsgut (26) betreffenden Datensignale die Materialeigenschaften des Fräsguts (26) betreffenden Datensignale sind, insbesondere Materialeigenschaften des Fräsguts (26) und/oder Positionsdaten des gefrästen Abschnitts (28) des Bodenbelags (29).

10. System (3) nach einem der Ansprüche 1 bis 9, **dadurch gekennzeichnet, dass** die den Fräsbetrieb betreffenden Datensignale Betriebsparameter der Straßenfräse sind, insbesondere Frästiefe, abgetragenes Fräsvolumen, Vorschubgeschwindigkeit, Fräswalzendrehzahl, verwendete Fräswalze und/oder abgegebenes Drehmoment/Leistung des Antriebsmotors der Fräsmaschine (1) sind.

11. Verfahren zum Nachverfolgen von Fräsgut (26) durch
- Fräsen eines Abschnitts (28) eines Bodenbelags (29) mit einer Fräsmaschine (1) in einem Fräsbetrieb,
- Ablegen des während des Fräsbetriebs gefrästen Fräsguts (26) auf einer Ladefläche eines LKWs (14),
- Erfassen von das Fräsgut (26) betreffende Datensignale in einer ersten Erfassungseinrichtung (18),
- Transport des auf der Ladefläche des LKWs (14) ablegten Fräsguts (26) zu einer Ablagestelle (24) und Ablegen des Fräsguts (26) an der Ablagestelle (24),
**dadurch gekennzeichnet,**
**dass** mit Hilfe einer zweiten Erfassungseinrichtung (20) die Positionsdaten der Ablagestelle (24) erfasst werden, und wobei die erste und die zweite Erfassungseinrichtung (20) die das Fräsgut (26) betreffenden Datensignale und die Positionsdaten an eine Dokumentationseinrichtung (22) übermitteln, die die Positionsdaten und die das Fräsgut betreffenden Datensignale miteinander verknüpft.

12. Verfahren nach Anspruch 11, **dadurch gekennzeichnet, dass** die erste Erfassungseinrichtung (18) an der Fräsmaschine (1) angeordnet ist, vorzugsweise Teil einer Steuereinrichtung (16) der Fräsmaschine (1) ist.

13. Verfahren nach Anspruch 11 oder 12, **dadurch gekennzeichnet, dass** die zweite Erfassungseinrichtung (20) als Positionsdaten GPS Datensignale an der Ablagestelle (24) erfasst.

14. Verfahren nach einem der Ansprüche 11 bis 13, **dadurch gekennzeichnet, dass** die Übermittlung der Datensignale und/oder Positionsdaten zwischen erster und Dokumentationseinrichtung und/oder zwischen zweiter Erfassungseinrichtung und Dokumentationseinrichtung über eine drahtlose Verbindung, insbesondere Funkverbindung erfolgt.

15. Verfahren nach einem der Ansprüche 11 bis 14, **dadurch gekennzeichnet, dass** die Dokumentationseinrichtung (22) außerhalb der Fräsmaschine (1) und außerhalb der zweiten Erfassungseinrichtung (20) angeordnet ist.

## Claims

1. System (3) for tracking milling material (26), comprising
- a milling machine (1) for milling a section (28) of a ground pavement (29) in a milling operation,
- a truck (14) for loading and transporting away the milling material (26) removed during milling of the section (28) of the ground pavement (29),
- a deposition site (24) for depositing the milling material (26) transported away by the truck (14),
- a first detection device (18) for detecting data signals relating to the milling material (26),
**characterized in that**
a second detection device (20) detects position data of the deposition site of the milling material (26), wherein the first and the second detection device (18, 20) transmit the data signals (60) relating to the milling material (26) and the position data of the deposition site (24) to a documentation device (22) which links the position data with the data signals relating to the milling material (26).

2. System (3) according to claim 1, **characterized in that** the first detection device (18) detects the data signals relating to the milling material (26) from the control device (16) of the milling machine (1).

3. System (3) according to claim 1 or 2, **characterized in that** the first detection device (18) is arranged at the milling machine (1), is preferably part of the control device (16) of the milling machine (1).

4. System (3) according to any one of the claims 1 to 3, **characterized in that** the second detection device (20) is a mobile telephone or a transponder, specifically, RFID chip or a device comprising a GPS receiver and preferably transmitter for transmitting GPS data.

5. System (3) according to any one of the claims 1 to 4, **characterized in that** the second detection device (20) detects GPS data signals at the deposition site (24) as position data.

6. System (3) according to any one of the claims 1 to 5, **characterized in that** the documentation device (22) is part of the first detection device (18) or part of the second detection device (20).

7. System (3) according to any one of the claims 1 to 5, **characterized in that** the documentation device (22) is arranged outside of the milling machine (1) and outside of the second detection device (20).

8. System (3) according to any one of the claims 1 to 7, **characterized in that** transmission of the data signals and/or position signals between the first detection device (18) and the documentation device (22) and/or between the second detection device (20) and the documentation device (22) is effected via a wireless connection, specifically, radio connection.

9. System (3) according to any one of the claims 1 to 8, **characterized in that** the data signals relating to the milling material (26) are data signals relating to the material properties of the milling material (26), specifically, material properties of the milling material (26) and/or position data of the milled section (28) of the ground pavement (29).

10. System (3) according to any one of the claims 1 to 9, **characterized in that** the data signals relating to the milling operation are operating parameters of the road milling machine, specifically, milling depth, milling volume removed, advance speed, milling drum speed of revolution, milling drum used and/or torque/output emitted by the drive engine of the milling machine (1).

11. Method for tracking milling material (26) by means of
- milling a section (28) of a ground pavement (29) with a milling machine (1) in a milling operation,
- depositing the milling material (26) milled during the milling operation on a loading surface of a truck (14),
- detecting data signals relating to the milling material (26) in a first detection device (18),
- transporting the milling material (26) deposited on the loading surface of the truck (14) to a deposition site (24) and depositing the milling material (26) at the deposition site (24),
**characterized in that**
the position data of the deposition site (24) are detected by means of a second detection device (20), and wherein the first and the second detection device (20) transmit the data signals relating to the milling material (26) and the position data to a documentation device (22) which links the position data with the data signals relating to the milling material.

12. Method according to claim 11, **characterized in that** the first detection device (18) is arranged at the milling machine (1), is preferably part of a control device (16) of the milling machine (1).

13. Method according to claim 11 or 12, **characterized in that** the second detection device (20) detects GPS data signals at the deposition site (24) as position data.

14. Method according to any one of the claims 11 to 13, **characterized in that** transmission of the data signals and/or position data between the first detection device and the documentation device and/or between the second detection device and the documentation device is effected via a wireless connection, specifically, radio connection.

15. Method according to one of the claims 11 to 14, **characterized in that** the documentation device (22) is arranged outside of the milling machine (1) and outside of the second detection device (20).

## Revendications

1. Système (3) de suivi du fraisat (26), avec
- une fraiseuse (1) destinée au fraisage d'un tronçon (28) d'un revêtement de sol (29) dans un mode fraisage,
- un camion (14) destiné au chargement et à l'évacuation du fraisat (26) enlevé lors du fraisage du tronçon (28) du revêtement de sol (29),
- un emplacement de dépose (24) destiné à la dépose du fraisat (26) évacué avec le camion (14),
- un premier dispositif de détection (18) destiné à la détection de signaux de données concernant le fraisat (26),
**caractérisé en ce**
**qu'**un deuxième dispositif de détection (20) détecte des données de position de l'emplacement de dépose du fraisat (26), le premier et le deuxième dispositif de détection (18, 20) transmettant les signaux de données (60) concernant le fraisat (26) et les données de position de l'emplacement de dépose (24) à un dispositif de documentation (22) qui combine entre eux les données de position et les signaux de données concernant le fraisat (26).

2. Système (3) selon la revendication 1, **caractérisé en ce que** le premier dispositif de détection (18) détecte les signaux de données concernant le fraisat (26) à partir du dispositif de commande (16) de la fraiseuse (1).

3. Système (3) selon la revendication 1 ou 2, **caractérisé en ce que** le premier dispositif de détection (18) est disposé sur la fraiseuse (1), fait de préférence partie du dispositif de commande (16) de la fraiseuse (1).

4. Système (3) selon l'une des revendications 1 à 3, **caractérisé en ce que** le deuxième dispositif de détection (20) est un téléphone mobile ou un transpondeur, en particulier une puce RFID ou un appareil avec un récepteur GPS et de préférence avec un transmetteur pour la transmission de données GPS.

5. Système (3) selon l'une des revendications 1 à 4, **caractérisé en ce que** le deuxième dispositif de détection (20) détecte en tant que données de position des signaux de données GPS à l'emplacement de dépose (24).

6. Système (3) selon l'une des revendications 1 à 5, **caractérisé en ce que** le dispositif de documentation (22) fait partie du premier dispositif de détection (18) ou fait partie du deuxième dispositif de détection (20).

7. Système (3) selon l'une des revendications 1 à 5, **caractérisé en ce que** le dispositif de documentation (22) est disposé à l'extérieur de la fraiseuse (1) et à l'extérieur du deuxième dispositif de détection (20).

8. Système (3) selon l'une des revendications 1 à 7, **caractérisé en ce que** la transmission des signaux de données et/ou de position entre le premier dispositif de détection (18) et le dispositif de documentation (22) et/ou entre le deuxième dispositif de détection (20) et le dispositif de documentation (22) s'effectue par le biais d'une liaison sans fil, en particulier d'une liaison radio.

9. Système (3) selon l'une des revendications 1 à 8, **caractérisé en ce que** les signaux de données concernant le fraisat (26) sont des signaux de données concernant les caractéristiques de matériau du fraisat (26), en particulier des caractéristiques de matériau du fraisat (26) et/ou des données de position du tronçon (28) fraisé du revêtement de sol (29).

10. Système (3) selon l'une des revendications 1 à 9, **caractérisé en ce que** les signaux de données concernant le mode fraisage sont des paramètres de fonctionnement de la fraiseuse routière, en particulier la profondeur de fraisage, le volume de fraisat enlevé, la vitesse d'avance, la vitesse de rotation du cylindre de fraisage, le cylindre de fraisage utilisé et/ou le couple/la puissance délivré(e) par le moteur d'entraînement de la fraiseuse (1).

11. Procédé de suivi du fraisat (26) par
- le fraisage d'un tronçon (28) d'un revêtement de sol (29) avec une fraiseuse (1) dans un mode fraisage,
- dépose, sur une surface de chargement d'un camion (14), du fraisat (26) fraisé pendant le mode fraisage,
- détection de signaux de données concernant le fraisat (26) dans un premier dispositif de détection (18),
- transport du fraisat (26) déposé sur la surface de chargement du camion (14) vers un emplacement de dépose (24) et dépose du fraisat (26) à l'emplacement de dépose (24),
**caractérisé en ce que**
les données de position de l'emplacement de dépose (24) sont détectées à l'aide d'un deuxième dispositif de détection (20), et les premier et deuxième dispositifs de détection (20) transmettent les signaux de données concernant le fraisat (26) et les données de position à un dispositif de documentation (22) qui combine entre eux les données de position et les signaux de données concernant le fraisat.

12. Procédé selon la revendication 11, **caractérisé en ce que** le premier dispositif de détection (18) est disposé sur la fraiseuse (1), faisant de préférence partie d'un dispositif de commande (16) de la fraiseuse (1).

13. Procédé selon la revendication 11 ou 12, **caractérisé en ce que** le deuxième dispositif de détection (20) détecte en tant que données de position des signaux de données GPS à l'emplacement de dépose (24).

14. Procédé selon l'une des revendications 11 à 13, **caractérisé en ce que** la transmission des signaux de données et/ou des données de position entre le premier dispositif de détection et le dispositif de documentation et/ou entre le deuxième dispositif de détection et le dispositif de documentation s'effectue par le biais d'une liaison sans fil, en particulier d'une liaison radio.

15. Procédé selon l'une des revendications 11 à 14, **caractérisé en ce que** le dispositif de documentation (22) est disposé à l'extérieur de la fraiseuse (1) et à l'extérieur du deuxième dispositif de détection (20).
